# EUROPÄISCHE PATENTSCHRIFT

(11) **EP 2 228 575 B1**
(45) Veröffentlichungstag und Bekanntmachung des Hinweises auf die Patenterteilung: **27.07.2016**
(21) Anmeldenummer: 10001952.0
(22) Anmeldetag: 25.02.2010
(51) Int. Cl.: F16K 31/06

(54) **Elektromagnet**
Electromagnet
Electroaimant

(30) Priorität: 06.03.2009 DE 102009011575
(43) Veröffentlichungstag der Anmeldung: 15.09.2010
(73) Patentinhaber: Firma SVM Schultz Verwaltungs-GmbH & Co. KG, 87700 Memmingen (DE)
(72) Erfinder: Tappe, Dr.-Ing. Peter, 87700 Memmingen (DE); Schuck, Björn, 87700 Memmingen (DE)
(74) Vertreter: Pfister, Stefan Helmut Ulrich

(56) Entgegenhaltungen:
- EP-A1- 1 813 805
- WO-A1-2005/026528
- DE-A1-102004 030 976
- DE-A1-102004 058 692
- DE-B3-102007 005 915
- US-B1- 6 276 663

## Beschreibung

Die Erfindung betrifft einen Elektromagneten, insbesondere für mediensteuernde Ventile, bei welchen in einem Ankerraum ein beweglich gelagerter, auf einen Stößel wirkender Anker vorgesehen ist und eine Spule vorgesehen ist, welche Wicklungen eines stromdurchfließbaren Drahtes trägt, und zumindest der Ankerraum mit einer Ankerraumflüssigkeit gefüllt ist und die Ankerraumflüssigkeit auf eine Membran wirkt, um die durch die Ankerbewegung hervorgerufene Volumenänderung im Ankerraum zu kompensieren.

Die eingangs beschriebenen Elektromagneten sind zum Beispiel für Anwendung in Ventilen mit aggressiven Medien bekannt. Bei diesen ist es vorteilhaft, den Innenraum des Elektromagneten vom Medium des Ventiles zu trennen. Hierbei ist es bekannt, ein Membran auf der dem Ventil zugewandten Seite am Elektromagneten anzuordnen, die einerseits am Stößel fest angekoppelt ist und andererseits am Magnetgehäuse befestigt ist.

Die DE 10 2007 005 915 zeigt ein Magnetventil, das eine Membran aufweist. Diese ist jedoch steif gegen Verbindungen ausgebildet und daher nicht in der Lage durch die Ankerbewegung hervorgerufene Volumenänderung im Ankerraum zu kompensieren.

Dabei ist zu beachten, dass der Stößel mit einem Dichtelement zusammenwirkt, das seinerseits mit einem Dichtsitz oder einer Dichtfläche zusammenwirkt, um diese/n wahlweise (entsprechend der Stellung des Ankers) zu verschließen oder zu öffnen. Dabei ist es bekannt, den Stößel (dieser wird auch als Ankerstange beschrieben) fest oder lose, also schwimmend relativ zum Anker, anzuordnen. Der Stößel ragt dabei aus dem Elektromagneten seitlich hervor und wirkt mit dem Dichtelement des Ventils zum Beispiel im Ventilblock zusammen.

Die Steuerung des Dichtelementes beziehungsweise des Stößels erfolgt dabei durch den Stromfluss durch die Wicklungen eines stromdurchfließbaren Drahtes, welche auf einer Spule angeordnet sind. Durch den Stromfluss bildet sich ein Magnetfeld aus, dessen Magnetfeldlinien im Inneren der Spule im Wesentlichen axial zur Spulenachse orientiert sind und auf den magnetisierbaren Anker wirken und diesen bewegen. Dabei wird der Anker in entsprechende Endlagen bewegt, für die Rückstellung des Ankers sind dann gegebenenfalls andere Stellmittel, zum Beispiel Federn und so weiter vorgesehen. Die Rückstellung kann aber auch mittelbar durch den Druck des zu steuernden Mediums erfolgen. Es sind daher sowohl aktive wie passive Rückstellantriebe bekannt.

Gattungsgemäße Elektromagneten werden dabei insbesondere für die Steuerung von Ventilen eingesetzt, die zum Beispiel in hydraulischen Kreisläufen eingesetzt werden. Zu beachten ist, dass das Druckniveau in hydraulischen Kreisläufen erheblich ist und 50 bar, 100 bar oder sogar 150 bar erreichen oder sogar überschreiten kann.

Um mit diesen Druckbelastungen keine Kraftwirkung auf den Anker auszuüben, ist es bekannt, den Innenraum des Magneten, insbesondere den Ankerraum, aber auch andere Voluminas im Innenraum des Magneten, mit einer Ankerraumflüssigkeit zu füllen. Üblicherweise erfolgt dieser Befüllvorgang vor der Inbetriebnahme des Ventiles. Als Ankerraumflüssigkeit wird dabei zum Beispiel Öl verwendet, die Ankerraumflüssigkeit ist dabei bevorzugt unabhängig von dem von dem Ventil gesteuerten Medium und gegebenenfalls auch nach anderen Kriterien ausgewählt. Es ist zum Beispiel möglich, eine Ankerraumflüssigkeit mit optimaler Viskosität für die Ankerlagerung einzusetzen oder auch sauberes Öl ohne Verschmutzung vorzusehen.

Die Wirkung des mit der Ankerraumflüssigkeit befüllten Innenraums des Magneten liegt darin, dass sich dadurch bei einer Druckbelastung des Mediums keine Kraftwirkung über die Membran aufbauen kann, da diese Kraft unmittelbar über die Ankerraumflüssigkeit auf das Magnetgehäuse abgegeben wird.

Nun ergibt es sich, dass der Schaltvorgang des Elektromagneten, also die Bewegung des Ankers, zu einem Eintauchen beziehungsweise Herausschieben eines Teils der Ankerstange beziehungsweise Stößels führt. Das in den Magnetinnenraum, namentlich in den Ankerraum eintauchende Volumen dieses Teils des Stößels verdrängt die Ankerraumflüssigkeit und führt zu einer Ausbeulung der Membran, um so ein zusätzliches Volumen für die Ankerraumflüssigkeit zur Verfügung zu stellen, welches im Prinzip dem Volumen des eindringenden Stößelteiles entspricht.

In der Folge erfährt also die Membran eine mechanische Belastung, die Membran ist hierauf auszulegen. Bei den bekannten Anordnungen stützt sich die Membran einerseits am Magnetgehäuse und andererseits am beweglichen Anker beziehungsweise Stößel ab, wodurch die Membran eine erhebliche mechanische Beanspruchung aufgrund der Bewegung des Ankers beziehungsweise Stößels erfährt, da die Membran dieser Bewegung unmittelbar zu folgen hat.

Eine übermäßig mechanische Belastung der Membran begrenzt die Lebensdauer gattungsgemäßer Elektromagneten. Es ist daher Ziel der vorliegenden Erfindung, einen Elektromagneten zur Verfügung zu stellen, der eine höhere Lebensdauer bei einwandfreiem Betrieb besitzt.

Zur Lösung dieser Aufgabe geht die Erfindung aus von einem Elektromagneten wie eingangs beschrieben und schlägt vor, dass die Membran nur von mindestens einem unbeweglich angeordnetem Bauteil des Elektromagneten gehalten ist, wobei durch die Membran eine Trennung zwischen der Ankerraumflüssigkeit und einem zu steuernden Medium oder einem Außenraum erreichbar ist, wobei der Magnetkern von mindestens einer Ausgleichsöffnung durchdrungen ist, die einen ventilseitig vorgesehenen, mit Ankerraumflüssigkeit befüllten Membranraum mit dem Ankerraum verbindet. Durch diese Maßgabe erreicht die Erfindung, dass die Membran bereits nicht mehr die mechanische Beanspruchung der Bewegung des Stößels beziehungsweise des Ankers auszugleichen hat, diese mechanische Beanspruchung wird bereits vermieden. Des Weiteren ist die Membran an dem Elektromagneten so anzuordnen und auch auszubilden, dass durch geschickte Flächengestaltung der Hub der Membran verhältnismäßig gering ausfällt, da das von der Membran zur Verfügung gestellte Ausgleichsvolumen, aufgrund des eintauchenden Stößelteiles, auf eine entsprechend große Membranfläche verteilt wird.

Durch den erfindungsgemäßen Vorschlag wird erreicht, dass die Hubbewegung zunächst nicht sofort zu einer Membranbewegung führt. Die Hubbewegung wird dabei bevorzugt über einen losen Stößel übertragen. Die in dem Inneren des Magneten, insbesondere im Ankerraum ein- und austauchende Stange führt zu einer Verdrängung von Ankerraumflüssigkeit. Diese hieraus resultierende Volumenänderung wird durch eine geschickte Dimensionierung der Membran so kompensiert, dass keine übermäßige mechanische Beanspruchung oder Stressung der Membran resultiert.

Dies wird zum Beispiel durch eine geschickte Auswahl der Querschnittsverhältnisse von Stößel beziehungsweise Hub zur Fläche der Membran und Membranhub kompensiert. Hieraus resultiert letztendlich trotzdem eine große Hubbewegung des Stößels bei vergleichsweise sehr geringer Membranbewegung, auch hat die Bewegung des Stößels nicht die mechanischen Widerstandskräfte der Membran zu überwinden. Ein entsprechend ausgebildeter Elektromagnet schaltet leichter.

Der Ankerraum wird ventilseitig von einem Magnetkern begrenzt. Daher befindet sich der Magnetkern zwischen Ankerraum und Ventilraum, der Ventilraum beschreibt dabei den Raum, in welchem das Dichtelement mit dem Dichtsitz oder der Dichtfläche zusammenwirkt und den Medienstrom steuert beziehungsweise regelt. Im Ventilraum befindet sich das zu steuernde Medium. Der Stößel ist in geeigneter Weise mittelbar oder unmittelbar im Magnetkern gelagert. Hierzu bieten sich mehrere Varianten an.

In einer ersten Variante ist vorgesehen, dass ein in den Magnetkern einsetzbarer Magnetkerneinsatz vorgesehen ist, der eine den Stößel führende und lagernde Bohrung aufweist. Dies entspräche einer mittelbaren Lagerung (über dem Magnetkerneinsatz) im Magnetkern. Eine solche konstruktive Ausgestaltung hat den Vorteil, dass mit Hilfe des Magnetkerneinsatzes auch die Membran fest gespannt oder gehalten werden kann.

Neben der mehrteiligen Ausgestaltung des Magnetkerns, bei welcher der Stößel in einem separaten Magnetkerneinsatz gelagert ist, ist auch eine Variante der Erfindung vorgesehen, bei welcher eine den Stößel führende und lagernde Bohrung im Magnetkern (unmittelbar) vorgesehen ist.

Der erfindungsgemäße Grundgedanke hat zum Ziel, die mechanische Beanspruchung, also die mechanische Bewegung der Membran zu reduzieren, weswegen erfindungsgemäß vorgeschlagen wird, die Membran ausschließlich mit im Elektromagnet unbeweglich angeordneten Bauteilen zu verbinden. Hieraus resultiert, dass die Membran in ihrer bekannten Weise nicht mehr verantwortlich ist für eine Abdichtung des Magnetinneren, insbesondere des Ankerraums und anderer damit verbundener Voluminas gegenüber dem Ventilraum, in welchem die unter Umständen aggressiven Medien sind. Es ist daher eine entsprechende Abdichtung, insbesondere im Bereich der Bohrung, in welcher der Stößel gelagert ist, vorzusehen. Zunächst ist dabei eine enge Spielpassung in der Bohrung für den Stößel vorgesehen, was gleichzeitig eine ausreichende Dichtung bewirkt. Insbesondere ist eine direkte, metallische Lagerung des Stößels in der Bohrung vorgesehen.

Dabei ist es erfindungsgemäß natürlich auch vorgesehen, dass im Bereich der Bohrung, welche für die Lagerung des Stößels verantwortlich zeichnet, eine Dichtung vorgesehen ist. Diese kann zum Beispiel als O-Ring-Dichtung in eine Nut der Bohrung eingelegt sein und so eine Abdichtung bewirken, die Abdichtung kann aber auch im Endbereich der Bohrung in geeigneter Weise angeordnet sein.

In einer bevorzugten Variante der Erfindung ist vorgesehen, dass die Membran den Stößel ringartig umgibt, wobei die Membran mit dem Stößel nicht verbunden ist, insbesondere die Membran nicht der Bewegung des Stößels durch mittelbare Kontaktierung folgt. Neben einer ringartigen Ausgestaltung der Membran ist es natürlich auch möglich, eine Mehrzahl von segmentartigen Membranen vorzusehen.

Geschickterweise ist beim erfindungsgemäßen Elektromagneten die Anordnung so gewählt, dass der Magnetkern von mindestens einer Ausgleichsöffnung durchdrungen ist, die einen ventilseitig vorgesehenen, mit Ankerraumflüssigkeit befüllten Membranraum mit dem Ankerraum verbindet.

Gemäß der Erfindung ist nicht nur der Ankerraum mit der Ankerraumflüssigkeit befüllt, sondern auch weitere, geschickterweise mit dem Ankerraum kommunizierende Voluminas im Inneren des Magneten. Da durch die Befüllung des Magnetinneren mit einer Ankerraumflüssigkeit eine übermäßige Kraftbelastung des Ankers bei Druckbeaufschlagung der gesamten Anordnung vermieden werden soll, wird eine Abstützung der Membran über die Ankerraumflüssigkeit zum Magnetgehäuse hin geschaffen, wobei natürlich die bezüglich des Ankerraums jenseitig des Magnetkerns angeordnete Membran die Abgrenzung zwischen dem Ventilraum und dem Magnetinneren darstellt. Um eine leitungsmäßige Verbindung zum Ankerraum herzustellen, werden daher entsprechende Ausgleichsöffnungen, die den Magnetkern durchdringen, vorgesehen, wobei mindestens eine oder auch mehrere Ausgleichsöffnungen gemäß der Erfindung angeordnet sind. Magnetseitig, rückseitig an der Membran, bildet sich somit ein Membranraum aus, der ebenfalls mit Ankerraumflüssigkeit befüllt ist und in druck- und volumenmäßiger Verbindung mit dem Ankerraum steht.

Gemäß einer bevorzugt rotationssymmetrischen Ausgestaltung ist der Membranraum am Magnetkern ringnutartig ausgebildet und wird bevorzugt von der ringartig ausgebildeten Membran, die wie auch die Ringnut den Stößel umgibt, verschlossen.

Geschickterweise ist daher vorgesehen, dass die Membran zwischen Ventilraum und Membranraum angeordnet ist. Die Anordnung ist insbesondere so, dass sich an den Ventilraum magnetseitig die Membran anschließt, dann gegebenenfalls der Membranraum folgt, der seinerseits durch den Magnetkern vom Ankerraum getrennt ist.

Die Anordnung der Membran an dem erfindungsgemäßen Elektromagneten ist dabei sehr variabel. Erfindungsgemäß wird vorgeschlagen, dass die Membran von unbeweglichen Bauteilen des Elektromagneten gehalten ist. Hierzu dienen zum Beispiel Elemente des Magnetkerns, des Magnetgehäuses und/oder des Magnetkerneinsatzes, die am Elektromagneten selber feststehend ausgebildet sind.

Natürlich ist es möglich, wie dies auch in einer erfindungsgemäßen Variante vorgeschlagen wird, dass die Membran zwischen dem Magnetkerneinsatz und dem Magnetkern angeordnet ist und von diesem gehalten ist. Dabei ist es günstig, dass die Membran zum Beispiel im Nahtbereich zwischen Magnetkern und Magnetkerneinsatz klemmend gehalten ist.

Insbesondere wird in einer erfindungsgemäßen Variante vorgeschlagen, dass die Membran von verschiedenen Bereichen des Magnetkerns und/oder des Magnetkerneinsatzes, als unbewegliche Bauteile des Elektromagneten, den Membranraum überspannend, gehalten ist. Die Anordnung ist dabei so gewählt, dass die Membran am Magnetkern und/oder am Magnetkerneinsatz beziehungsweise entsprechenden Bereichen des Magnetkerns beziehungsweise Magnetkerneinsatzes befestigt ist, was insofern einem "Halten" im Kontext der Erfindung gleichwertig ist. Als Befestigung zählt zum Beispiel eine Schweißverbindung oder eine Klebverbindung, auch ein Festklemmen ist ein Halten beziehungsweise Befestigen in Sinne der Erfindung. Auch ein formschlüssiges Lagern der Membran, zum Beispiel in einer Tasche oder ähnlichem ist ein Halten beziehungsweise Befestigen im Sinne der Erfindung.

In einer bevorzugten Ausgestaltung der Erfindung wird dabei vorgeschlagen, dass der ringnutartige Membranraum von Seitenwänden als Teil des Magnetkerns begrenzt wird und die Membran auf den Seitenflächen aufliegt und/oder mit diesen verbunden, insbesondere verschweißt oder verklebt ist. Auch das Aufliegen beziehungsweise Verbinden ist im Sinne der Erfindung eine Ausgestaltung des Haltens.

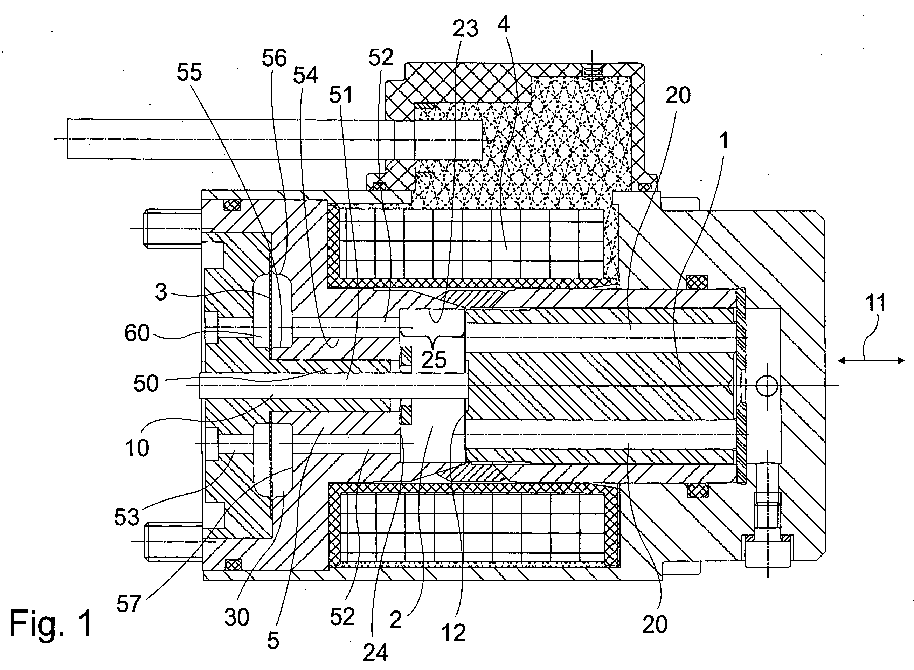

Günstigerweise ist in einer weiteren erfindungsgemäßen Variante vorgesehen, dass der Magnetkerneinsatz mindestens eine Durchdringungsöffnung aufweist. Gemäß einer erfindungsgemäßen Variante, die insbesondere zum Beispiel in Fig. 1 gezeigt ist, wird die Membran zwischen dem Magnetkern und dem Magnetkerneinsatz angeordnet. Somit ist ventilseitig gesehen ein Teil des Magnetkerneinsatzes zwischen der Membran und dem übrigen Ventilraum. Durch die Anordnung von Durchdringungsöffnungen in dem Magnetkerneinsatz wird eine entsprechend kommunizierende Verbindung zwischen der zum Membranraum abseitigen Seite der Membran und dem übrigen Ventilraum hergestellt, wodurch die Druckverhältnisse des Mediums unmittelbar auf die Membran wirken können.

In einer bevorzugten Ausgestaltung der Erfindung ist es weiterhin vorgesehen, dass mindestens eine den Anker durchdringende Ankerbohrung vorgesehen ist. Sie dient einem Druck- und Volumenausgleich innerhalb des Ankerraumes bei der Bewegung des Ankers. Des Weiteren ergibt sich durch die Ankerbohrung eine Verringerung der Masse des Ankers, was günstig für dessen Beschleunigung ist.

Die Erfindung ist bei der Realisierung ausgesprochen variantenreich. Neben einer Anordnung, bei welcher die Membran zwischen dem mit Arbeitsdruck beaufschlagten Medium und der Ankerraumflüssigkeit angeordnet ist, umfasst die Erfindung auch Varianten, bei welchen die Membran an dem dem Stößel abgewandten Ende des Ankerraumes, insbesondere am Ankerraumboden oder an der Ankerraummantelfläche angeordnet ist. Bei einer solchen Variante ergibt es sich günstigerweise, dass die Membran von dem möglicherweise aggressiven Medium, welches durch das Ventil strömt, getrennt ist.

In einer bevorzugten Ausgestaltung der Erfindung ist dabei vorgesehen, dass der Umgebungsdruck, zum Beispiel Luftdruck, auf der dem Ankerraum abgewandten Seite der Membran auf diese wirkt. Somit stellt die Membran eine Grenzfläche zwischen der Ankerraumflüssigkeit und ihrer Umgebung dar. In diesem Fall wirkt hier der Umgebungsdruck. Um zu vermeiden, dass eine Druckbelastung des Ventilmediums nicht mehr abgefangen werden kann, wird in einer erfindungsgemäßen Variante die Membran von einem elastischen Element unterstützt, welches vorzugsweise auf der zum Ankerraumvolumen abgewandten Seite angeordnet ist.

Die Ausgestaltung ist dabei gegebenenfalls so gewählt, dass die Membran in geeigneter Weise am Ankerraumboden oder an der Ankerraummantelfläche befestigt, insbesondere druckdicht befestigt ist. Hierfür können zum Beispiel wieder die diversen Schweiß-, Löt- oder Klebverfahren, die hinlänglich bekannt sind, Verwendung finden, die exakte Auswahl des Verbindungsverfahrens wie auch in den anderen Ausführungsbeispielen beschrieben, hängt natürlich von dem Material der Membran ab.

Bezüglich der Ausgestaltung der Erfindung ist es dabei gleichwertig, ob die Membran im Ankerraumboden, welcher dem Magnetkern mit der Öffnung gegenüberliegt oder in der bevorzugt zylinderartigen Ankerraummantelfläche angeordnet ist.

Das elastische Element ist bevorzugt zum Beispiel eine Feder, die auf der dem Ankerraum abgewandten Seite der Membran, in einer Tasche oder ähnlichem angeordnet ist.

In einer weiteren erfindungsgemäßen Ausgestaltung ist vorgesehen, dass die Ankerraumflüssigkeit auf einen, eine Membran aufweisenden, als elastisches Element wirkenden, insbesondere von der Ankerraumflüssigkeit umspülten Membrankörper wirkt, und der Membrankörper in einer Tasche gehalten ist. Bei dieser Variante ist eine klebende oder schweißende Verbindung zwischen dem Membrankörper und den einzelnen Bauteilen des Elektromagneten nicht zwingend vorgesehen. Es ist zum Beispiel vorgesehen, dass der Membrankörper als kissenartiger Körper die Membran und das elastische Element in sich integriert und in einer Tasche, von Ankerraumflüssigkeit umspült, in kommunizierender Weise mit dem Ankerraum verbunden angeordnet ist. Der Membrankörper ist zum Beispiel als geschlossenes Elastomerelement gebildet. Die im Wesentlichen lose Anordnung des Membrankörpers in einer Tasche ist ebenfalls eine Variante des erfindungsgemäß vorgeschlagenen Haltens der Membran von einem im Elektromagneten unbeweglich angeordneten Bauteil (in diesem Fall der Tasche). Tatsächlich stützt sich der Membrankörper unter Umständen an der die Tasche bildende Wandung ab und erfährt somit eine Fixierung beziehungsweise Halterung.

Für die Ausgestaltung der Membran bestehen ebenfalls mehrere Variante, erfindungsgemäß ist zum Beispiel vorgesehen, dass dieses als Elastomer, also aus einem Kunststoff (z. B. Silikon, Gummi, Viton) besteht, oder aber die Membran ist als Metallmembran realisiert und insbesondere aus Stahl oder ähnlichen Legierungen gebildet.

Des Weiteren umfasst die Erfindung auch ein Ventil, insbesondere ein Hydraulikventil, welches aus einem mit Anschlüssen für Leitungen für das Medium ausgestatteten Ventilblock besteht und einen Elektromagneten wie beschrieben aufweist, wobei der Stößel auf ein, eine Dichtfläche wahlweise verschließendes oder freigebendes Dichtelement wirkt. Die Dichtfläche ist dabei bevorzugt ein Bauteil des Ventilblockes.

In der Zeichnung ist die Erfindung schematisch in verschiedenen Ausführungsbeispielen dargestellt. Es zeigen:
Fig. 1 bis 4 je einen vertikalen Schnitt durch einen erfindungsgemäßen Elektromagneten.

In den Figuren sind gleich oder einander entsprechende Elemente jeweils mit den gleichen Bezugszeichen bezeichnet und werden daher, sofern nicht zweckmäßig, nicht erneut beschrieben.

Die in den Fig. dargestellten Ausführungsbeispiele sind Beispiele für die Realisierung der Erfindung und beschränken die Erfindung nicht auf die hier dargestellte Ausgestaltung.

Der typische Aufbau eines erfindungsgemäßen Elektromagneten ergibt sich zum Beispiel aus Fig. 1. Der Elektromagnet umfasst dabei ein nicht weiter dargestelltes Gehäuse, in welchem sich die Spule 4 befindet. Auf der Spule 4 sind eine Vielzahl von Wicklungen eines von elektrischem Strom durchfließbaren Drahtes aufgewickelt. Wird diese Wicklung mit elektrischem Strom beaufschlagt, so bildet sich ein Magnetfeld aus, welches anziehender- oder abstoßenderweise auf einen magnetisierbaren Körper wirkt. Zumindest teilweise umgibt die Spule 4 den Ankerraum 2. Der Ankerraum 2 nimmt den Anker 1 auf, der hierin beweglich gelagert ist. Der Anker 1 ist aus magnetisierbarem Material geschaffen und reagiert auf das von der Spule 4 beziehungsweise seiner Wicklungen erzeugten Magnetfeld.

Der Ankerraum 2 ist zylinderartig gebildet und ist gegebenenfalls mit geeigneten Mitteln ausgestattet, den Anker 1 zu führen. Zum Beispiel sind im Spalt zwischen Anker 1 und der seitlichen Ankerraummantelfläche 23 eine Gleitfolie vorgesehen. Auf eine solche kann aber auch verzichtet werden, wenn zum Beispiel die in dem Ankerraum 2 eingefüllte Ankerraumflüssigkeit entsprechende Gleiteigenschaften vermittelt.

Der Anker 1 wirkt auf eine Ankerstange oder Stößel 10. Der Stößel 10 rangt aus dem Ankerraum 2 in den hier gezeigten Ausführungsbeispielen nach links durch eine Bohrung 51 heraus. An seinem dem Anker 1 abgewandten Ende wirkt der Stößel 10 auf ein nicht weiter dargestelltes Dichtelement in einem Ventilblock eines ebenfalls zur Erfindung zählenden Ventiles, insbesondere eines Hydraulikventiles.

Die Verbindungen zwischen dem Stößel 10 und dem Anker 1 ist dabei entweder lose, also fliegend zueinander oder aber die beiden Elemente sind miteinander verbunden.

Der Stößel 10 ist derart in der Bohrung 51 gelagert, dass die in dem Ankerraum 2 befindliche Ankerraumflüssigkeit durch den Spalt zwischen dem Stößel 10 und der Bohrung 51 nicht oder kaum austreten kann. Umgekehrt wird über die Verbindung keine oder nur geringste Schmutzpartikel von dem Bereich des Ventilraumes (dieser schließt sich links vom linken Ende des Stößel 10 an) in den Ankerraum 2 hereintransportiert. Die entsprechend dichte Ausgestaltung kann durch eine entsprechend exakte Passung zwischen Stößel 10 und Bohrung 51 bewirkt werden oder aber es ist eine separate Dichtung vorgesehen.

In dem in Fig. 1 gezeigten Ausführungsbeispiel ist die Bohrung 51 in einem vom Magnetkern 5 getrennten, als separaten Bauteil ausgebildeten Magnetkerneinsatz 50 realisiert.

Dieser Magnetkerneinsatz 50 steckt seinerseits in einer Bohrung oder Ausnehmung 54, die im Magnetkern 5 angeordnet ist. Natürlich ist der Durchmesser der Bohrung 54 größer als der Durchmesser des Stößels 10 beziehungsweise der Bohrung 51, welche den Stößel 10 führt und abdichtet. In dem hier gezeigten Beispiel ist die Bohrung 54 so ausgeführt, dass der Magnetkern 5 komplett von der Bohrung 54 durchdrungen ist. In dem hier gezeigten Ausführungsbeispiel schließt sich der Magnetkern längsseitig an dem Anker 1 an und wird ebenfalls teilweise von der Spule 4 axial überdeckt. Die magnetische Wirkung entfaltet ihren vollen Effekt an dem linksseitigen Ende des Ankers 1, wobei der sich hieraus bildende Luftspalt durch den Abstand zwischen der linken Endfläche 12 und der Ankerraumdeckfläche mit dem Bezugszeichen 25 definiert ist. Dabei schließt die Ankerraumdeckfläche 24 den Magnetkern 5 beziehungsweise den zum Ankerraum 2 hin orientierten Bereich des Magnetkerneinsatzes 50 zu diesen hin ab.

Auf der dem Ankerraum 2 abgewandten Seite des Magnetkernes 5 schließt sich der Membranraum 30 an. Der Membranraum 30 steht in kommunizierender Verbindung mit dem Ankerraum 2 durch eine oder mehrere Ausgleichsöffnungen 52, die bevorzugt parallel zur Bohrung 51 beziehungsweise Stößel 10 den Magnetkern 5 durchdringen.

Der Membranraum 30 umgibt dabei ungefähr in der Mitte der axialen Lage des Stößels 10 in der Bohrung 51 die Bohrung 51 beziehungsweise den Stößel 10.

Der Membranraum 30 ist gebildet von zwei im wesentlich parallel zur Bohrung 51 verlaufenden Seitenwänden 55/56, wobei die innere Seitenwand mit 55 und die äußere Seitenwand mit 56 gekennzeichnet ist. Die innere Seitenwand 55 und die äußere Seitenwand 56 sind verbunden durch die Bodenfläche 57. In der Bodenfläche 57 enden auch die den Membranraum 30 mit dem Ankerraum 2 verbindenden Ausgleichsöffnungen 52.

Die Bewegungsrichtung des Ankers 1 ist durch den Doppelpfeil 11 angegeben. Diese ist parallel zur axialen Erstreckung des Stößels 10 beziehungsweise die den Stößel 10 führenden Bohrung 51. Die Ausgleichsöffnungen 52 sind bevorzugt hierzu parallel ausgebildet, aber nicht zwingend, es können auch schräge Bohrungen vorgesehen sein.

So wie der Ankerraum 2 mit Ankerraumflüssigkeit gefüllt ist, befindet sich die Ankerraumflüssigkeit auch in den Ausgleichsöffnungen 52 und somit in dem Membranraum 30. Der Membranraum 30 wird einerseits begrenzt von der Seiteninnenwand 55, der Seitenaußenwand 56 sowie der Bodenfläche 57, die jeweils Bauteile des Magnetkernes 5 sind. Abgeschlossen wird der Membranraum 30 durch die sich von der Seiteninnenwand 55 zur Seitenaußenwand 56 ringartig erstreckende Membran 3. Dabei liegt die Membran 3 auf dem sich neben der Seiteninnenwand 55 beziehungsweise Seitenaußenwand 56, der Bodenfläche 57 abgewandten Ende ausbildenden Absatz auf. Hier ist die Membran 3 in geeigneter Weise gehalten, zum Beispiel verklebt, verschweißt oder auch verklemmt, wobei natürlich eine dichte Anordnung angestrebt ist, um tatsächlich eine mediale Trennung zwischen der Ankerraumflüssigkeit einerseits und dem (unter Umständen aggressiven) zu steuernden Medium, das sich im Ventilraum 60 anschließt, zu erreichen.

Im Schnitt gesehen, ist der Magnetkerneinsatz 50 T-artig ausgebildet. An dem schmäleren in dem Magnetkern 5 einstehenden, in der Bohrung 54 gehaltenen Abschnitt, schließt sich der breitere die Membran 3 haltende Deckelbereich an. Die Anordnung ist dabei so getroffen, dass die Membran 3 zwischen dem Magnetkerneinsatz 50 und die Magnetkern 5 festgehalten ist. Dies kann zum Beispiel durch ein Verschweißen oder auch durch ein Verklemmen oder Verkleben erfolgen.

In dem hier gezeigten Ausführungsbeispiel ist der Membranraum 30 ringnutartig realisiert und wird von einer ringscheibenartigen Membran 3 abgedeckt. Auf der dem Ankerraum abgewandten Seite der Membran 3 schließt sich dann ein zum Ventilraum 60 zählendes ebenfalls ringartiges Teilvolumen an, das durch die Durchdringungsöffnungen 53, die sich im Deckelbereich des Magnetkerneinsatzes 50 befinden, in kommunizierender Verbindung mit dem Medienkreislauf des zu steuernden Mediums befindet.

In dem hier gezeigten Ausführungsbeispiel kann man aber nicht die Erfindung beschränken. Dabei ist die Durchdringungsöffnung 53 des Magnetkerneinsatzes 50 und die Ausgleichsöffnung 52, die den Kern 5 durchdringt koaxial und mit gleichem Durchmesser ausgeführt. Hiervon kann natürlich im Sinne der Erfindung auch abgewichen werden.
Durch die hier definierte Ausgestaltung ergibt sich, dass die Membran 3 von im Elektromagneten unbeweglichen Bauteil, nämlich dem Magnetkern 5 und dem Magnetkerneinsatz 50, gehalten ist. Aufgrund der durch die Ankerbewegung hervorgerufenen Volumenänderungen im Ankerraum 2 wird die Ankerraumflüssigkeit verdrängt und über die in kommunizierender Verbindung stehenden Bereiche die hieraus resultierende Volumenänderung auf die Membran 3 übertragen (hierfür dient die Ausgleichsöffnung 52), die dadurch eine entsprechende Ausbeulung nach links, weg vom Ankerraum 2 erfährt, bis sich hier entsprechendes zusätzliches Volumen ergibt, das dem in den Ankerraum eintauchenden Teilvolumen des Stößels 10 gerade entspricht.

Auch der Anker 1 besitzt zur Bewegungsrichtung 11 parallel angeordnete Ankerbohrungen 20, die es erlauben, dass die Ankerraumflüssigkeit je nach Stellung des Ankers 2 von der einen Seite auf die andere Seite fließen kann.

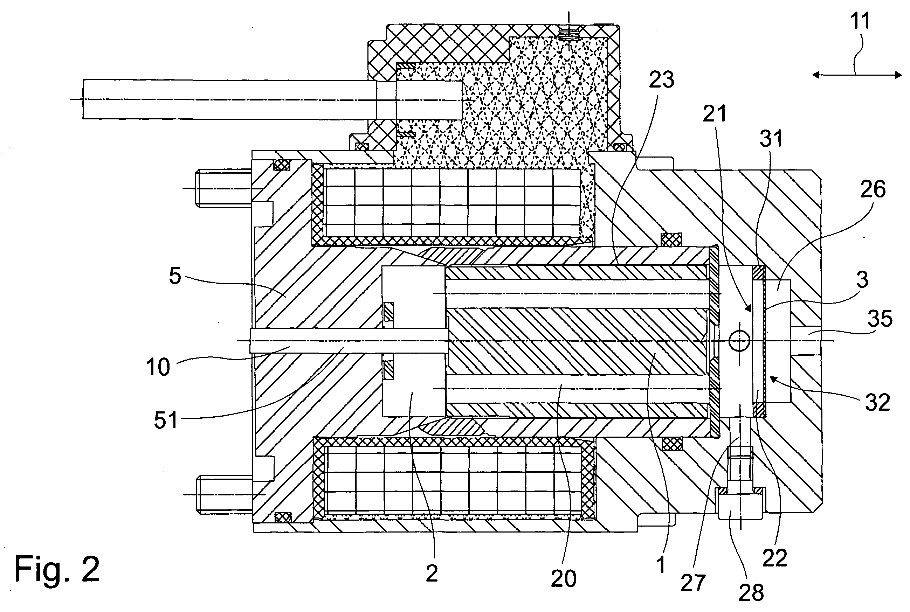

In Fig. 2 ist im linken Bereich eine alternative Ausgestaltung der Führung des Stößels 10 gezeigt. In der hier gezeigten Variante besitzt der Magnetkern 5 nicht zusätzlich noch einen Magnetkerneinsatz wie in Fig. 1 dargestellt, sondern in dem Magnetkern 5 ist unmittelbar eine Bohrung 51 vorgesehen, die der Lagerung des Stößels 10 dient. Es ist klar, dass die hier gezeigte Variante in geeigneter Weise auch mit dem in Fig. 1 gezeigten Ausführungsbeispiel kombinierbar ist und z. B. eine separate Halterung der Membran 3 am linken Ende des Magnetkernes, welche dem Ankerraum 2 abgewandt ist, möglich ist.

In Fig. 2 ist die erfindungsgemäß vorgesehene Membran 3 an dem dem Magnetkern 5 abgewandten Ende 21, im Ankerraumboden 22 integriert ausgeführt. Mit einem bezüglich des Ankerraumes 2 verringerten Innendurchmesser befindet sich im Ankerraumboden 22 eine Tasche 26, die von der Membran 3 dicht überspannt wird. Die Membranbefestigung ist mit dem Bezugszeichen 31 gekennzeichnet und z. B. ringartig am Rand der Membran 3 auf dem Absatz, der sich zwischen der Tasche 26 (mit dem kleineren Innendurchmesser) und dem Ankerraum 2 (mit dem größeren Innendurchmesser) ergibt, vorgesehen. Die Membranbefestigung 31 ist z. B. als Befestigungsring, Schweißwulst usw. ausbildbar.

Die Membran 3 stellt eine dichte Abgrenzung des Ankerraumes 2, der mit Ankerraumflüssigkeit gefüllt ist, zur Außenseite 32 dar. Es ist eine Belüftungsöffnung 35 vorgesehen, die seitlich an der Membran 3, dem Ankerraum 2 abgewandt, eine Hinterlüftung der Membran 3 bewirkt. Die Tasche 26 ist somit zumindest teilweise auf Umgebungsdruckniveau.

An dieser Stelle sei erwähnt, dass der Ankerraum 2 durch die Befüllöffnung 27 mit Ankerraumflüssigkeit befüllbar ist. Die Befüllöffnung 27 erstreckt sich hierbei radial bezüglich der Bewegungsrichtung 11 des Ankers 1. Die Befüllöffnung ist durch einen entfernbaren Stopfen 28 verschließbar.

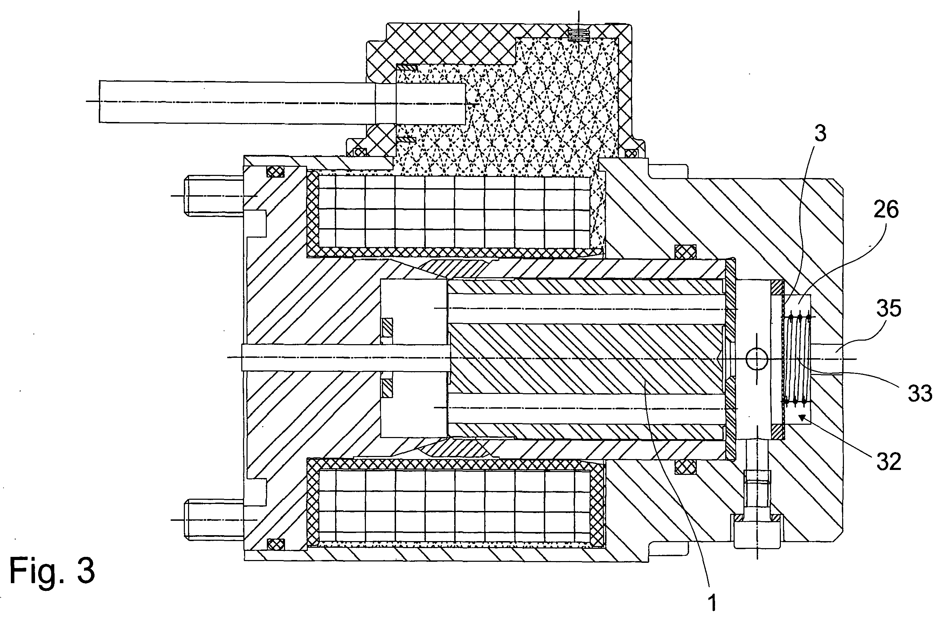

Zusätzlich zu dem in Fig. 2 gezeigten Ausführungsbeispiel zeigt Fig. 3 die Anordnung eines elastischen Elementes 33, hier z. B. einer Feder in der Tasche 26. Sie stützt die Membran auf der dem Ankerraum 2 abgewandten Außenseite 32 ab. Im Übrigen ist die Anordnung in Fig. 3 der in Fig. 2 identisch. Die Anordnung eines elastischen Elementes 33, z. B. einer Feder bewirkt, dass eine Druckbelastung des Ventilmediums im Ankerraum abgefangen wird.

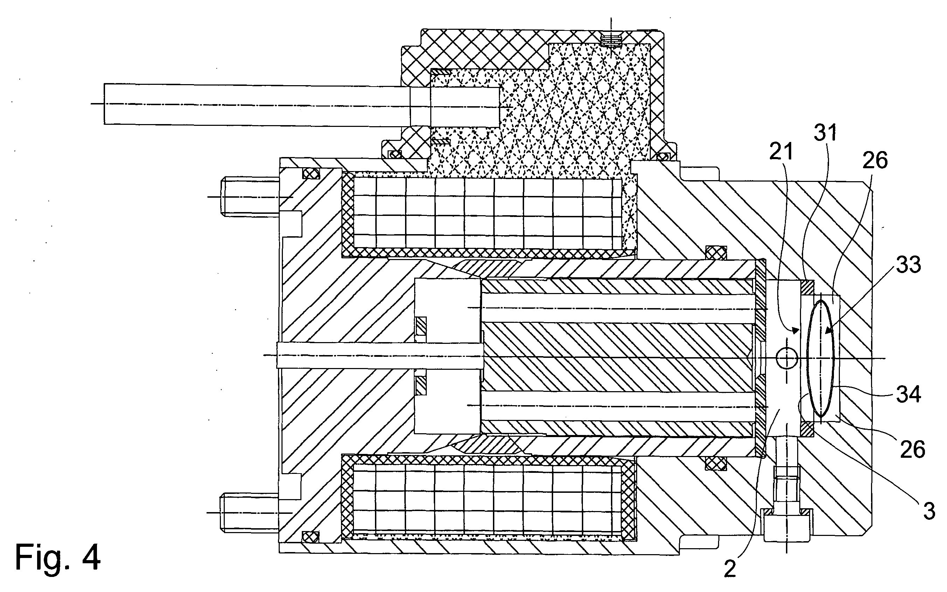

In Fig. 4 ist eine weitere erfindungsgemäße Variante gezeigt. Die Membran 3 grenzt hier das Innere des Membrankörpers 34 von dem Ankerraum 2 ab. Der Membrankörper 34 selber ist als elastisches Element 33 realisiert und besitzt eine entsprechende Elastizität, die z. B. durch eine Ausgestaltung mit einem Elastomer oder durch die Anordnung eines entsprechenden federnden Elementes im Inneren des Membrankörpers 34 ausgeführt ist.

Im Gegensatz zu den Lösungen nach Fig. 2 oder 3 ist hier keine Belüftungsöffnung 35 in der Wandung vorgesehen, die gesamte Tasche 26 ist wie der Ankerraum 2 von Ankerraumflüssigkeit durchströmt. Der Membrankörper wird mehr- oder allseitig von Ankerraumflüssigkeit umspült. Da aber das Innere des Membrankörpers 34 z. B. mit Gas gefüllt ist, ist es möglich, den Membrankörper 34 gegen das Gasvolumen zu komprimieren und so den gleichen Effekt zu bewirken, wie mit dem elastischen Element 33 (der Feder) nach Fig. 3.

In dem in Fig. 4 gezeigten Ausführungsbeispiel ist gezeigt, dass der Membrankörper 34 in die Tasche 26 im Boden des Ankerraumbodens 22 eingelegt und so gehalten ist. Gegebenenfalls ist hier eine entsprechende Membranbefestigung 31 vorgesehen, die ein Halten oder Fixieren des die Membran 3 haltenden Membrankörpers 34 in der Tasche 26 bewirkt. Dies kann z. B. ein nach innen vorstehender Befestigungsflansch sein.

Die jetzt mit der Anmeldung und später eingereichten Ansprüche sind Versuche zur Formulierung ohne Präjudiz für die Erzielung weitergehenden Schutzes.

Es ist weiter zu beachten, dass die in den verschiedenen Ausführungsformen beschriebenen und in den Figuren gezeigten Ausgestaltungen und Varianten der Erfindung beliebig untereinander kombinierbar sind.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Elektromagnet, insbesondere für mediensteuernde Ventile, bei welchem in einem Ankerraum (2) ein beweglich gelagerter, auf einen Stößel (10) wirkender Anker (1) vorgesehen ist, und eine Wicklungen eines stromdurchfließbaren Drahtes tragende Spule (4) vorgesehen ist, und zumindest der Ankerraum (2) mit einer Ankerraumflüssigkeit gefüllt ist, und die Ankerraumflüssigkeit auf eine Membran (3) wirkt, um die durch die Ankerbewegung hervorgerufene Volumenänderung im Ankerraum (2) zu kompensieren, wobei die Membran (3) nur von mindestens einem, im Elektromagnet unbeweglich angeordneten Bauteil (5, 50, 26) gehalten ist, wobei durch die Membran eine Trennung zwischen der Ankerraumflüssigkeit und einem zu steuernden Medium oder einem Außenraum erreichbar ist, **dadurch gekennzeichnet, dass** der Magnetkern (5) von mindestens einer Ausgleichsöffnung (52) durchdrungen ist, die einen ventilseitig vorgesehenen, mit Ankerraumflüssigkeit befüllten Membranraum (30) mit dem Ankerraum (2) verbindet.

2. Elektromagnet nach Anspruch 1, **dadurch gekennzeichnet, dass** der Stößel (10) unmittelbar oder mittelbar im Magnetkern (5, 50) gelagert ist und dass sich der Magnetkern (5) zwischen dem Ankerraum (2) und dem Ventilraum (60) befindet.

3. Elektromagnet nach einem oder beiden der vorhergehenden Ansprüche, **dadurch gekennzeichnet, dass** ein in den Magnetkern (5) einsetzbarer Magnetkerneinsatz (50) vorgesehen ist, der eine den Stößel (10) führende und lagernde Bohrung (51) aufweist und/oder eine den Stößel (10) führende und lagernde Bohrung (51) im Magnetkern (5) vorgesehen ist und/oder in der Bohrung (51) eine enge Spielpassung vorgesehen ist.

4. Elektromagnet nach einem oder mehreren der vorhergehenden Ansprüche, **gekennzeichnet durch** eine direkte, metallische Lagerung des Stößels (10) in der Bohrung (51) und/oder eine möglichst dichte Führung des Stößels (10) in der Bohrung (51).

5. Elektromagnet nach einem oder mehreren der vorhergehenden Ansprüche, **gekennzeichnet durch** die Anordnung einer Dichtung an der Bohrung (51) für die Durchführung des Stößels (10).

6. Elektromagnet nach einem oder mehreren der vorhergehenden Ansprüche, **dadurch gekennzeichnet, dass** die Membran (3) den Stößel (10) ringartig umgibt.

7. Elektromagnet nach einem oder mehreren der vorhergehenden Ansprüche, **dadurch gekennzeichnet, dass** der Membranraum (30) im Magnetkern (5) ringnutartig, den Stößel (10) umgebend vorgesehen ist und/oder die Membran (3) zwischen Ventilraum (60) und Membranraum (30) angeordnet ist.

8. Elektromagnet nach einem oder mehreren der vorhergehenden Ansprüche, **dadurch gekennzeichnet, dass** die Membran (3) zwischen dem Magnetkerneinsatz (50) und dem Magnetkern (5) angeordnet ist und von diesem gehalten ist und/oder die Membran (3) von verschiedenen Bereichen des Magnetkerns (5) und/oder des Magnetkerneinsatzes (50), als unbewegliche Bauteile des Elektromagneten, den Membranraum (30) überspannend, gehalten ist.

9. Elektromagnet nach einem oder mehreren der vorhergehenden Ansprüche, **dadurch gekennzeichnet, dass** der ringnutartige Membranraum (30) von Seitenwänden (55, 56) als Teile des Magnetkerns (5) begrenzt wird und die Membran (3) auf den Seitenwänden aufliegt und/oder mit diesen verbunden, inbesondere verschweißt oder verklebt ist und/oder der Magnetkerneinsatz (50) mindestens eine Durchdringungsöffnung (53) aufweist.

10. Elektromagnet nach einem oder mehreren der vorhergehenden Ansprüche, **gekennzeichnet durch** mindestens eine den Anker (1) durchdringende Ankerbohrung (20) und/oder die Anordnung der Membran (3) an dem dem Stößel (10) abgewandten Ende (21) des Ankerraumes (2), insbesondere am Ankerraumboden (22) oder an der Ankerraummantelfläche (23).

11. Elektromagnet nach einem oder mehreren der vorhergehenden Ansprüche, **dadurch gekennzeichnet, dass** der Umgebungsdruck auf der dem Ankerraum (2) abgewandten Außenseite (32) der Membran (3) auf diese wirkt und/oder die Membran (3) von einem elastischen Element (33) unterstützt ist und/oder das elastische Element (33) eine Feder ist.

12. Elektromagnet nach einem oder mehreren der vorhergehenden Ansprüche, **dadurch gekennzeichnet, dass** die Ankerraumflüssigkeit auf einen eine Membran (3) aufweisenden, als elastisches Element (33) wirkenden, insbesondere von Ankerraumflüssigkeit umspülten Membrankörper (34) wirkt und der Membrankörper (34) in einer Tasche (26) gehalten ist.

13. Elektromagnet nach einem oder mehreren der vorhergehenden Ansprüche, **dadurch gekennzeichnet, dass** die Membran (3) aus Elastomer besteht.

14. Elektromagnet nach einem oder mehreren der vorhergehenden Ansprüche, **dadurch gekennzeichnet, dass** die Membran (3) als Metallmembran, insbesondere aus Stahl oder ähnlich, ausgebildet ist.

15. Ventil, insbesondere Hydraulikventil, bestehend aus einem mit Anschlüssen für Medienleitungen ausgestatteten Ventilblock und einem Elektromagnet, nach einem oder mehreren der vorhergehenden Ansprüche, wobei der Stößel auf ein eine Dichtfläche wahlweise verschließendes oder freigebendes Dichtelement wirkt.

## Claims

1. Electromagnet, in particular for valves controlling media where in an armature housing (2) a movably mounted armature (1) acting on a tappet (10) is provided, and a coil (4) carrying windings of a wire that can be flown through by electricity is provided, and at least the armature housing (2) is filled with an armature housing liquid, and the armature housing liquid acts on a membrane (3) to compensate the volume change in the armature housing (2) caused by the armature movement, wherein the membrane (3) is held by only at least one component (5, 50, 26) arranged non-movably in the electromagnet, wherein the membrane achieves a separation between the armature housing liquid and a medium that has to be controlled or an exterior space, **characterized in that** the magnetic core (5) is penetrated by at least one compensation opening (52) connecting a membrane chamber (30) provided on the side of the valve and filled with armature housing liquid with the armature housing (2).

2. Electromagnet according to claim 1, **characterized in that** the tappet (10) is mounted directly or indirectly in the magnetic core (5, 50), and that the magnetic core (5) is located between the armature housing (2) and the valve chamber (60).

3. Electromagnet according to one or both of the preceding claims, **characterized in that** a magnetic core insert (50), that can be inserted in the magnetic core (5), having a bore hole (51) guiding and supporting the tappet (10), and/or a bore hole (51) guiding and supporting the tappet (10) is provided in the magnetic core (51), and/or in the bore hole (51) a narrow clearance fit is provided.

4. Electromagnet according to one or more of the preceding claims, **characterized by** a direct metallic support of the tappet (10) in the bore hole (51), and/or a guide as close as possible of the tappet (10) in the bore hole (51).

5. Electromagnet according to one or more of the preceding claims, **characterized by** the arrangement of a seal at the bore hole (51) for the penetration of the tappet (10).

6. Electromagnet according to one or more of the preceding claims, **characterized in that** the membrane (3) surrounds the tappet (10) ring-like.

7. Electromagnet according to one or more of the preceding claims, **characterized in that** the membrane chamber (30) is provided in the magnetic core (5) like a ring groove, surrounding the tappet (10), and/or the membrane (3) is arranged between the valve chamber (60) and the membrane chamber (30).

8. Electromagnet according to one or more of the preceding claims, **characterized in that** the membrane (3) is arranged between the magnetic core insert (50) and the magnetic core (5) and is held by it, and/or the membrane (3) is held by different regions of the magnetic core (5) and/or the magnetic core insert (50) as immobile components of the electromagnet and bridging the membrane chamber (30).

9. Electromagnet according to one or more of the preceding claims, **characterized in that** the ring groove-like membrane chamber (30) is delimited by side walls (55, 56) as parts of the magnetic core (5), and the membrane (3) rests on the side walls and/or is connected to them, in particular welded or glued, and/or the magnetic core insert (50) has at least one penetration opening (53).

10. Electromagnet according to one or more of the preceding claims, **characterized by** at least one armature bore hole (20) penetrating the armature (1), and/or the arrangement of the membrane (3) at the end (21) of the armature chamber (2) opposite the tappet (10), in particular at the bottom (22) of the armature chamber or at the lateral surface (23) of the armature chamber.

11. Electromagnet according to one or more of the preceding claims, **characterized in that** the ambient pressure on the outside (32) of the membrane (3) opposite the armature chamber (2) acts on the membrane, and/or the membrane (3) is supported by an elastic element (33), and/or the elastic element (33) is a spring.

12. Electromagnet according to one or more of the preceding claims, **characterized in that** the armature chamber liquid acts on a membrane body (34) that has a membrane (3), acts as elastic element (33), and is in particular surrounded by armature chamber liquid, and the membrane body (34) is held in a pocket.

13. Electromagnet according to one or more of the preceding claims, **characterized in that** the membrane (3) consists of elastomer.

14. Electromagnet according to one or more of the preceding claims, **characterized in that** the membrane (3) is configured as metal membrane, in particular of steel or the like.

15. Valve, in particular hydraulic valve, consisting of a valve block equipped with joints for media conducts, and an electromagnet, according to one or more of the preceding claims, wherein the tappet acts on a sealing element that either seals or releases a sealing surface.

## Revendications

1. Electroaimant, en particulier destiné aux soupapes régulant le débit d'un fluide, comportant un induit magnétique mobile (1) maintenu et agissant sur un poussoir (10) à l'intérieur d'un espace d'induit (2) et un enroulement d'un fil formant une bobine (4) et pouvant supporter des courants électriques dans une configuration où au moins l'espace d'induit (2) est rempli d'un liquide d'induit lequel agit sur une membrane (3) permettant de compenser les variations de volume à l'intérieur de l'espace d'induit (2) provoquées par le mouvement de l'induit magnétique mobile de façon à ce que la membrane (3) est maintenue à l'intérieur de l'électroaimant par un seul élément de construction immobile (5, 50, 26) permettant d'obtenir une séparation entre le liquide d'induit et le fluide à réguler ou l'espace extérieur, **caractérisé en ce que** le noyau magnétique (5) possède au moins une ouverture d'ajustement traversant (52) connectant un espace de membrane (30) situé du côté de la soupape et rempli du liquide d'induit à l'espace d'induit (2).

2. Electroaimant selon la revendication 1, **caractérisé en ce que** le poussoir (10) est maintenu directement ou indirectement à l'intérieur du noyau magnétique (5, 50) et **en ce que** le noyau magnétique (5) est situé entre l'espace d'induit (2) et l'espace de soupape (60).

3. Electroaimant selon une ou les deux revendications précédentes, **caractérisé en ce qu'**un élément d'insertion (50) est prévu à l'intérieur du noyau magnétique (5) possédant un perçage (51) maintenant et guidant le poussoir (10) et/ou **en ce qu'**un perçage (51) est prévu au niveau du noyau magnétique (5) maintenant et guidant le poussoir (10) et/ou **en ce qu'**un ajustement avec un jeu réduit est prévu au niveau du perçage (51).

4. Electroaimant selon une ou plusieurs des revendications précédentes, **caractérisé par** une fixation directe et métallique du poussoir (10) à l'intérieur du perçage (51) et/ou par un guidage le plus serré possible du poussoir (10) à l'intérieur du perçage (51).

5. Electroaimant selon une ou plusieurs des revendications précédentes, **caractérisé par** la présence d'un élément d'étanchéité au niveau du perçage (51) traversé par le poussoir (10).

6. Electroaimant selon une ou plusieurs des revendications précédentes, **caractérisé en ce que** la membrane (3) enferme le poussoir (10) comme un anneau.

7. Electroaimant selon une ou plusieurs des revendications précédentes, **caractérisé en ce que** l'espace de membrane (30), creusé dans le noyau magnétique (5) sous forme d'anneau, entoure le poussoir (10) et/ou **en ce que** la membrane (3) est située entre l'espace de soupape (60) et l'espace de membrane (30).

8. Electroaimant selon une ou plusieurs des revendications précédentes, **caractérisé en ce que** la membrane (3) est située entre l'élément d'insertion (50) et le noyau magnétique (5) en étant maintenue par le noyau magnétique et/ou **en ce que** la membrane (3) est maintenue par différentes régions du noyau magnétique (5) et/ou de l'élément d'insertion (50) du noyau magnétique comme des éléments de construction immobiles de l'électroaimant étendus au-dessus de l'espace de membrane (30).

9. Electroaimant selon une ou plusieurs des revendications précédentes, **caractérisé en ce que** l'espace de membrane (30) formant une gorge circulaire est délimité par des parois latérales (55, 56) faisant partie du noyau magnétique (5) et **en ce que** la membrane (3) repose sur les parois latérales et/ou est liée à elles et en particulier soudée ou collée sur elles et/ou **en ce que** l'élément d'insertion (50) du noyau magnétique possède au moins un perçage traversant (53).

10. Electroaimant selon une ou plusieurs des revendications précédentes, **caractérisé par** au moins un perçage d'induit (20) traversant l'induit (1) et/ou par une configuration où la membrane (3) est située au niveau de l'extrémité (21) opposée au poussoir (10) de l'espace d'induit (2) et en particulier au niveau du fond de l'espace d'induit (2) ou au niveau de la face latérale d'enveloppe (23) de l'espace d'induit.

11. Electroaimant selon une ou plusieurs des revendications précédentes, **caractérisé en ce que** la pression ambiante situé à l'extérieur (32) de la membrane (3) et de l'espace de membrane (2) agit sur la membrane (3) et/ou **en ce que** la membrane (3) est supportée par un élément élastique (33) et/ou **en ce que** l'élément élastique (33) est un ressort.

12. Electroaimant selon une ou plusieurs des revendications précédentes, **caractérisé en ce que** le liquide de l'espace d'induit agit sur un corps de membrane (34) comportant une membrane (3) et agissant comme élément élastique (33) et en étant en particulier entouré par le liquide de l'espace d'induit et **en ce que** ce corps de membrane (34) est maintenu dans une poche (26).

13. Electroaimant selon une ou plusieurs des revendications précédentes, **caractérisé en ce que** la membrane (3) est formée d'élastomère.

14. Electroaimant selon une ou plusieurs des revendications précédentes, **caractérisé en ce que** la membrane (3) est en métal, en particulier en acier ou en un matériau similaire.

15. Soupape, en particulier soupape hydraulique, consistant en un bloc de soupape comportant des branchements pour les fluides, et en un électroaimant selon une ou plusieurs des revendications précédentes de façon à ce que le poussoir agisse sur un élément d'étanchéité ouvrant ou fermant une surface d'étanchéité.
